**Europäisches Patentamt**

**European Patent Office**

**Office européen des brevets**

(19)

(11) Veröffentlichungsnummer: **0 024 007**
**B1**

(12) **EUROPÄISCHE PATENTSCHRIFT**

(45) Veröffentlichungstag der Patentschrift:
**23.03.83**

(51) Int. Cl.³: **B 23 Q 21/00**, G 01 B 7/00

(21) Anmeldenummer: **80104454.6**

(22) Anmeldetag: **29.07.80**

(54) **Vorrichtung zur Prüfung eines Gewindes.**

(30) Priorität: **01.08.79 DE 2931273**

(43) Veröffentlichungstag der Anmeldung:
**18.02.81 Patentblatt 81/7**

(45) Bekanntmachung des Hinweises auf die Patenterteilung:
**23.03.83 Patentblatt 83/12**

(84) Benannte Vertragsstaaten:
**AT BE CH FR GB IT LI LU NL SE**

(56) Entgegenhaltungen:
**DE-A-2 636 747**
**DE-A-2 733 339**
**DE-B-1 502 477**
**DE-B-2 260 884**
**US-A-3 047 960**
**US-A-3 324 562**

(73) Patentinhaber: **Mauser-Werke Oberndorf GmbH,
Teckstrasse 11, D-7238 Oberndorf (DE)**

(72) Erfinder: **Maisenbacher, Hans,
Theodor-Quehl-Strasse 5, D-7238 Oberndorf (DE)**
Erfinder: **Martin, Harald, Gerwigstrasse 22,
D-7741 Schönwald (DE)**

(74) Vertreter: **Hofmann, Gerhard, Dipl.-Ing.,
Stephanstrasse 49, D-8500 Nürnberg (DE)**

BUNDESDRUCKEREI BERLIN

## Vorrichtung zur Prüfung eines Gewindes

Die Erfindung betrifft eine Vorrichtung für eine Bearbeitungsmaschine zur Prüfung der gegenseitigen Lage eines konischen Gewindes und einer diesem zugeordneten Anlageschulter mittels einer Tasteinrichtung, wobei ein erster Meßträger an einem Führungsblock in einer ersten Bewegungsrichtung diesem gegenüber beweglich gelagert ist, ein zweiter Meßträger an dem ersten Meßträger in einer linearen zweiten Bewegungsrichtung federnd gelagert ist und ein erster in der ersten Bewegungsrichtung an das Gewinde anfahrbarer Meßkopf sowie ein zweiter in der zweiten Bewegungsrichtung an die Anlageschulter anfahrbarer Meßkopf vorgesehen ist.

Eine derartige Vorrichtung ist in der DE-A-2 733 339 beschrieben. Bei dieser sind die zwei Meßträger auf einer Führungsstange drehbar konzentrisch zueinander angeordnet. Sie sind gegeneinander axial verschiebbar. Am ersten Meßkörper ist ein auf das Gewinde aufschraubbares Gewindestück und am zweiten Meßkörper eine der Anlageschulter zugeordnete Planfläche vorgesehen. Mittels der Tasteinrichtung wird die relative Lage der Meßkörper zueinander erfaßt. Mit dieser Vorrichtung erfolgt die Messung vor dem letzten Bearbeitungsgang der Anlageschulter. Damit wird durch die Messung die Bearbeitung unterbrochen. Insbesondere bei einer manuellen Eingabe des von der Meßvorrichtung ermittelten Meßwertes in die Steuerung der Werkzeugmaschine bedeutet dies eine Erhöhung der Fertigungszeiten.

Die genannte Meßvorrichtung gibt lediglich ein Korrekturmaß für die Anlageschulter. Fälle, in denen nachträglich die gewünschte gegenseitige Lage des Gewindes und der Anlageschulter nur noch durch Nachbearbeitung des Gewindes erreicht werden kann, sind mit der Vorrichtung nach der DE-AS-2 733 339 nicht zu beherrschen.

Außerdem ist nachteilig, daß die Vorrichtung mit einem konischen Gewindestück arbeitet, da die Gefahr besteht, daß dieses sich mit dem Werkstück verkeilt.

Die Vorrichtung nach der DE-AS-2 733 339 ist für die Bearbeitung von Außengewinden von Bohrköpfen für Erdölbohrer vorgesehen. Rohre mit konischem Gewinde und einer bei diesem angeordneten Anlageschulter werden bei Pipelines eingesetzt. Dabei weist jedes der Rohre auf der einen Seite ein Außengewinde und auf der anderen Seite ein entsprechendes Innengewinde oder nur Außen- oder Innengewinde auf. Die Anlageschulter dient der notwendigen Dichtung zwischen zwei Rohren. Damit gewährleistet ist, daß nach der Montage zweier Rohre deren Anlageschultern dicht aneinander anliegen, ist die gegenseitige Lage des konischen Gewindes und der Anlageschulter an jedem Rohrende zu kontrollieren.

Die Kontrolle der gegenseitigen Lage des konischen Gewindes und der Anlageschulter wird bei einem Außengewinde bisher so vorgenommen, daß ein Gewindelehrring mit konischem Innengewinde auf das Außengewinde des Rohrs so weit aufgeschraubt wird, bis er festsitzt. Anschließend wird dann der Abstand zwischen dem Gewindelehrring und der Anlageschulter gemessen. Entspricht das Meßergebnis dem Sollwert, dann ist die gegenseitige Lage des konischen Gewindes und der Anlageschulter richtig. Ist der gemessene Abstand kleiner als der Sollwert, dann ist die Schulter nachzuarbeiten. Ist dagegen der gemessene Abstand größer als der Sollwert, dann ist das Gewinde nachzuschneiden.

Entsprechend wird bisher auch das Innengewinde des Rohres vermessen. Es wird in diesem Fall in das Innengewinde ein Gewindelehrdorn mit den Sollmaßen eingeschraubt, bis er festsitzt. Steht der Gewindelehrdorn dann über die Anlageschulter über, ist das Innengewinde nachzuarbeiten. In der Praxis haben der Gewindelehrring und der Gewindelehrdorn aufgrund des Durchmessers der Rohre ein beträchtliches Gewicht. Um den Gewindelehrring bzw. den Gewindelehrdorn an das Rohr anzuschrauben, sind meist Hebezeuge erforderlich. Der Einsatz solcher Hebezeuge und die manuelle Vermessung der Lage des Gewindelehrrings bzw. des Gewindelehrdorns am jeweiligen Gewinde machen den Meßvorgang zeitaufwendig. Da die Bearbeitungsmaschine, die das Gewinde und die Anlageschulter herstellt, während der Messung nicht arbeiten kann, verschlechtert ein zeitaufwendiges Meßverfahren den Nutzungsgrad der Bearbeitungsmaschine.

Durch die DE-B2-2 260 884 ist eine Meßsteuereinrichtung an einer Schleifmaschine zum Feinbearbeiten der Stirnseiten von Wälzlagerringen bekannt. Dabei greift ein erster Meßkörper an die stirnseitige Lauffläche des Wälzlagerringes an, während ein zweiter Meßkörper stetig an der planparallel liegenden äußeren Stirnfläche anliegt. Beide Meßkörper stehen über axial zum Wälzlagerring bewegliche Tastarme miteinander und mit einem Feintaster in Wirkverbindung. Dadurch können die Stirnseiten von Wälzlagerringen in Abhängigkeit von der Lage der Laufbahn genau parallel geschliffen werden. Durch die Wirkverbindung der beiden Meßkörper miteinander wird der jeweilige Bearbeitungsvorgang durch eine Steuerung unterbrochen, wenn die zu bearbeitende Stirnseite einen definierten Abstand von der Mitte der Laufbahn erreicht hat.

Mit dieser offenbarten Meßsteuereinrichtung wird zwar die relative Lage zweier Ringflächen zueinander bestimmt, jedoch liegen diese Ringflächen planparallel zueinander, wodurch die Meßkörper lediglich in gleicher Bewegungsrichtung verschoben werden müssen. Mit dieser Meßsteuereinrichtung wird weder eine konisch verlaufende Fläche bzw. ein konisches Gewinde zu messen gefordert, noch eine um 90° versetzte Bewegungsrichtung verlangt. Demzufolge ist der genannte Aufbau der Meßsteuereinrichtung einfacher und grundverschieden von einer Meßeinrichtung, mit der die gegenseitige Lage eines konischen Gewindes und einer diesem zugeordneten Anlageschulter geprüft werden soll.

Ferner ist durch die US-A-3 047 960 ein Verfahren und eine Vorrichtung für eine komplette Aufzeichnung von Umfangsdaten zylindrischer Teile, insbesondere konischer Gewinde bekannt. Ein Anwendungsgebiet dieser Vorrichtung ist die Prüfung, Messung und Aufzeichnung von konischen Gewinden von Werkzeugverbindungen für Ölbohreinrichtungen. Nach dem Schutzbegehren der US-A-3 047 960 enthält das Verfahren eine Kombination von mehreren Einzelschritten, wobei klar zum Ausdruck kommt, daß neben der Abstimmung der Gewindeachse parallel zur Achse einer Führungsschraube vor allem die Gewindegänge durch Taster exakt gemessen und aufgezeichnet werden. Wenngleich diese Druckschrift die Messung von Gewindegängen eines konischen Gewindes aufzeigt, so geht aus ihr trotz des dargestellten großen technischen Aufwandes nicht die Messung der gegenseitigen Lage zweier Teile, nämlich eines konischen Gewindes und einer diesem zugeordneten Anlageschulter hervor.

Aufgabe der Erfindung ist es, eine Vorrichtung der eingangs genannten Art vorzuschlagen, die je nach den Maßen des bearbeiteten Werkstücks ein Korrekturmaß für die Anlageschulter oder das Gewinde abzuleiten erlaubt und die einfach und betriebssicher aufgebaut ist.

Erfindungsgemäß ist bei einer Vorrichtung der eingangs genannten Art obige Aufgabe dadurch gelöst, daß zum Anfahren des ersten Meßkopfes an das Gewinde der erste Meßträger in der ersten Bewegungsrichtung linear gegenüber dem Führungsblock versetzbar ist und die erste Bewegungsrichtung im Winkel von 90° zur zweiten Bewegungsrichtung liegt und daß eine erste Tasteinrichtung den Verschiebeweg des ersten Meßträgers bzw. ersten Meßkopfes in der ersten Bewegungsrichtung und eine zweite Tasteinrichtung den Verschiebeweg des zweiten Meßkopfes in der zweiten Bewegungsrichtung erfaßt.

Zur Prüfung der gegenseitigen Lage des konischen Gewindes und der Anlageschulter wird der Führungsblock bzw. der Schlitten der Werkzeugmaschine in eine bestimmte Stellung so gefahren, daß der erste Meßkopf mit dem Gewinde des jeweiligen Rohres in Eingriff kommt. Dabei verschiebt sich der erste Meßkopf. Das von der ersten Tasteinrichtung erfaßte Maß der Verschiebung entspricht dem jeweiligen Gewindedurchmesser. Die zweite Tasteinrichtung erfaßt die Lage der Anlageschulter. Die Ausgangsgrößen der beiden Tasteinrichtungen stehen miteinander in einem Zusammenhang. Sie geben an, ob das Gewinde oder die Anlageschulter nachzuarbeiten ist. Als Tasteinrichtungen werden vorzugsweise induktive Taster verwendet, deren elektrische Ausgangssignale durch übliche elektronische Mittel miteinander zu verarbeiten sind.

Durch die Erfindung ist eine Vorrichtung geschaffen, die sich an der Bearbeitungsmaschine, die insbesondere eine NC- oder programmgesteuerte Werkzeugmaschine ist, anordnen läßt. Mittels des Schlittens der Werkzeugmaschine wird die Vorrichtung an ein zu prüfendes Rohrende angefahren. Die Vorrichtung tastet die für die Prüfung notwendigen Größen ab, so daß ein manuelles Anschrauben von Gewindelehrringen oder Gewindelehrdornen und deren Nachmessung überflüssig ist.

Bei der Erfindung ist ein in bzw. auf das Gewinde zu schraubender Meßkopf vermieden. Der verwendete Meßkopf wird lediglich an das Gewinde angefahren. Er weist vorzugsweise wenigstens einen dem Gewinde entsprechenden Zahn auf. Der erste Meßkopf kann dadurch nicht nur sicher an das Gewinde angefahren werden. Er läßt sich auch leicht vom Gewinde abfahren, ohne daß ein Verkeilen auftreten kann.

Die Verwendung der erfindungsgemäßen Vorrichtung erlaubt eine sehr schnelle Erfassung des Korrekturmaßes für Gewinde oder Anlageschulter. Eine Unterbrechung des Bearbeitungsvorganges erfolgt nicht, da die Messung nach dem letzten Schnitt durchgeführt wird.

Vorteilhafte Ausgestaltungen der Erfindung ergeben sich aus den Unteransprüchen und der folgenden Beschreibung von Ausführungsbeispielen. In der Zeichnung zeigt

Fig. 1 eine Prüfvorrichtung für ein Rohr-Innengewinde in Seitenansicht,

Fig. 2 die Vorrichtung nach Fig. 1 in Aufsicht,

Fig. 3 eine Prüfvorrichtung für ein Rohr-Außengewinde in Seitenansicht und

Fig. 4 die Vorrichtung nach Fig. 3 in Aufsicht.

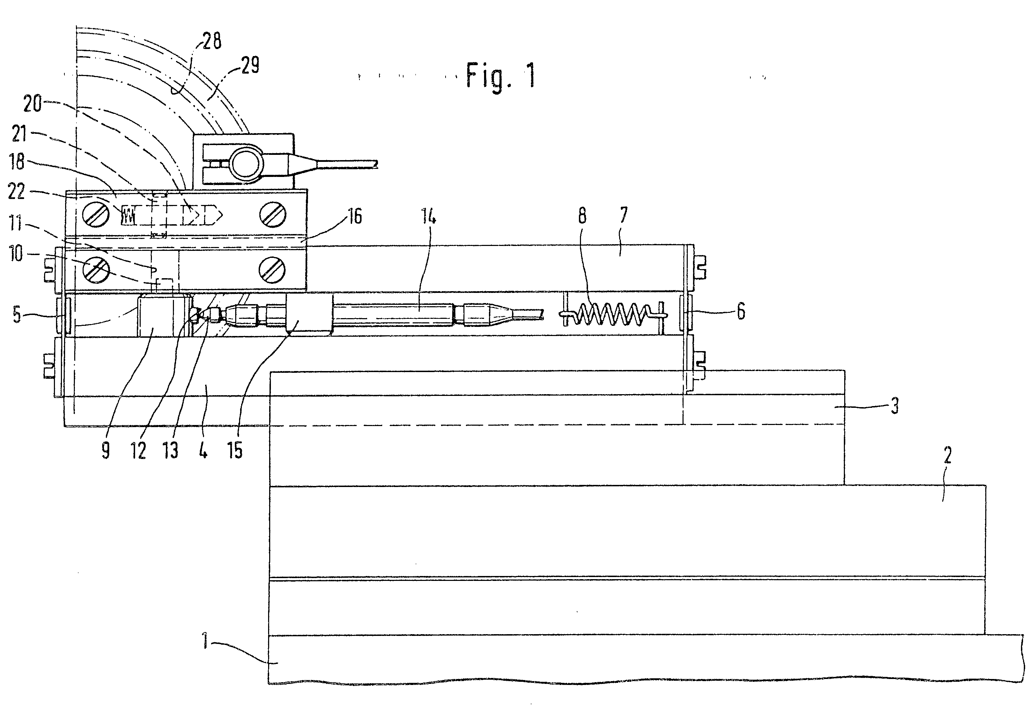

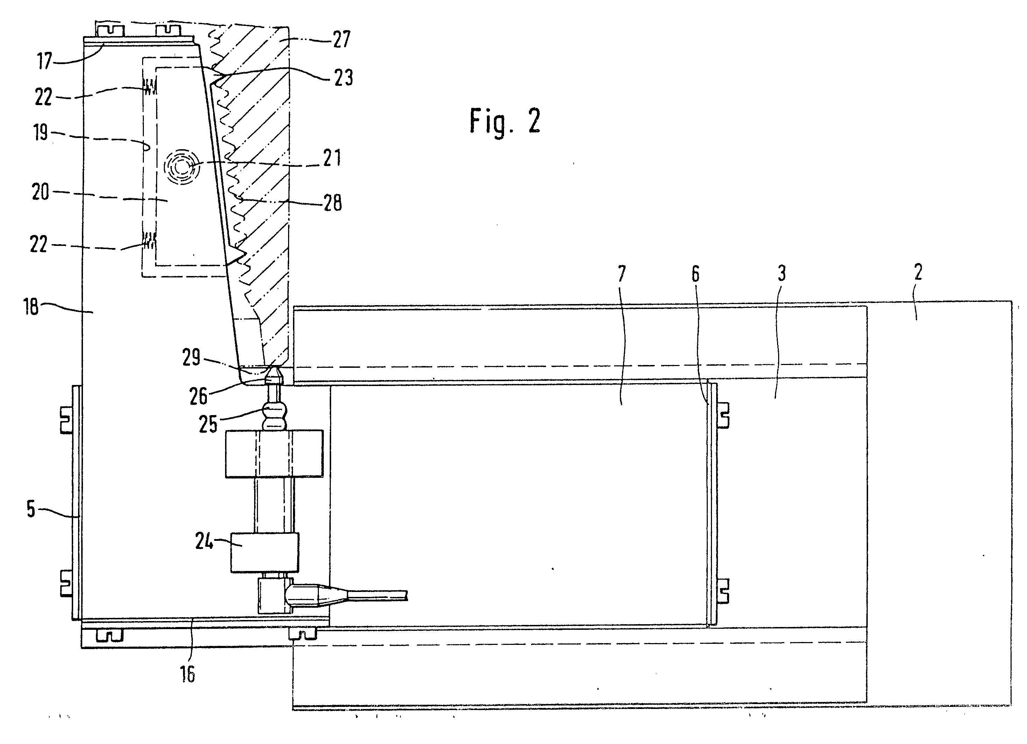

In den Fig. 1 und 2 ist an einem Schleppschlitten 1 einer Werkzeugmaschine ein Rollenschlitten 2 angeordnet. Auf diesem sitzt ein Führungskörper 3, an dem ein Block 4 befestigt ist. An den Enden des mittels des Schleppschlittens 1 verfahrbaren Blocks 4 sitzen Blattfedern 5 und 6. Zwischen den freien Enden der beiden Blattfedern 5 und 6 ist ein erster Meßträger 7 befestigt. Dieser ist damit gegenüber dem Block 4 parallelogrammartig versetzbar. Zwischen dem Block 4 und dem ersten Meßträger 7 ist eine Zugfeder 8 wirksam, welche den Blattfedern 5 und 6 eine Vorspannung aufprägt. An dem Block 4 ist ein Bolzen 9 mit einem Zapfen 10 befestigt. Der Zapfen 10 greift in eine Bohrung 11 des Meßträgers 7. Damit ist die mögliche Verschiebebewegung des Meßträgers 7 gegenüber dem Block 4 begrenzt.

An dem Bolzen 9 ist eine Anschlagfläche 12 ausgebildet, an welcher der Meßstift 13 einer ersten Tasteinrichtung 14 anliegt, die von einem induktiven Taster gebildet ist. Die Tasteinrichtung 14 ist mittels eines Haltebügels 15 an der Unterseite des Meßträgers 7 gehalten.

Beim Ausführungsbeispiel nach den Fig. 1 und 2 ist der erste Meßträger L-förmig ausgebildet, damit er in ein Innengewinde eingreifen kann (vgl. Fig. 2).

An den gegenüber den Blattfedern 5 und 6 rechtwinkligen Rändern des Meßträgers 7 sind an diesem weitere Blattfedern 16 und 17 befestigt. Zwischen den freien Enden der Blattfedern 16 und 17 ist ein zweiter Meßträger 18 angeordnet.

An dem Meßträger 18 ist in einer Ausnehmung 19 ein erster Meßkopf 20 an einem Zapfen 21 schwenkbar gelagert. Der Meßkopf 20 ist um den Zapfen 21 gegen Federn 22 kippbar. Der Meßkopf 20 weist an gegenüberliegenden Enden zwei Zähne 23 auf, deren Profil und Abstand dem zu messenden Gewinde angepaßt ist.

An dem zweiten Meßträger 18 ist eine zweite Tasteinrichtung 24, die ebenfalls von einem induktiven Taster gebildet ist, befestigt. Beim Ausführungsbeispiel nach den Fig. 1 und 2 bildet ein Meßstift 25 des induktiven Tasters 24 einen zweiten Meßkopf 26, der zur Anlage an einer Anlageschulter des zu prüfenden Rohres bestimmt ist.

Die beschriebene, in den Fig. 1 und 2 dargestellte Vorrichtung zur Prüfung der gegenseitigen Lage eines Innengewindes und einer Anlageschulter arbeitet etwa folgendermaßen:

Solange an einem Rohr 27 mittels an dem Schleppschlittens 1 befestigter üblicher Werkzeuge ein Innengewinde 28 und eine Anlageschulter 29 gefertigt wird, ist der Block 4 mittels des Rollschlittens 2 zurückgezogen. Zur Prüfung des gefertigten Innengewindes 28 und der Anlageschulter 29 wird der Rollenschlitten 2 gegen einen Festanschlag in die in den Fig. 1 und 2 dargestellte Stellung gefahren. Danach wird mittels des Schleppschlittens 1 der Meßkopf 20 in eine in der Werkzeugmaschine programmierte bestimmte Stellung an das Innengewinde 28 gefahren. Eine solche Stellung ist in den Fig. 1 und 2 dargestellt. Die Blattfedern 16 und 17 stellen sicher, daß eine zum Rohr 27 axiale Versetzung des Meßkopfes 20 so möglich ist, daß dessen Zähne 23 in Gewindegänge des Innengewindes 28 eingreifen. Je nachdem ob der Durchmesser des Innengewindes 28 oberhalb oder unterhalb des Sollwertes liegt, wird gegen die Wirkung der Blattfedern 5 und 6 bzw. der Zugfeder 8 der erste Meßträger 7 mehr oder weniger gegenüber dem Block 4 versetzt. Die jeweilige Versetzstrecke erfaßt der induktive Taster 14. Der induktive Taster 24 erfaßt den Abstand des Meßträgers 18 von der Anlageschulter 29. Es können dabei verschiedene Fallgruppen auftreten. Wenn der mittlere Innendurchmesser des konischen Innengewindes 28 zu groß ist und die Anlageschulter 29 entsprechend kürzer ist, ist ein fester und dichter Sitz eines auf das Innengewinde 28 aufzuschraubenden Rohrendes nicht beeinträchtigt, so daß eine Nachbearbeitung überflüssig ist. Das gleiche gilt für den umgekehrten Fall. Erst wenn die tatsächlichen Lagen des konischen Innengewindes 28 und der Anlageschulter 29 so ausgefallen sind, daß die Abweichungen einem sicheren Sitz eines Gegengewindes bzw. einer Gegenschulter entgegenstehen, ist eine Nachbearbeitung des Innengewindes bzw. der Anlageschulter notwendig.

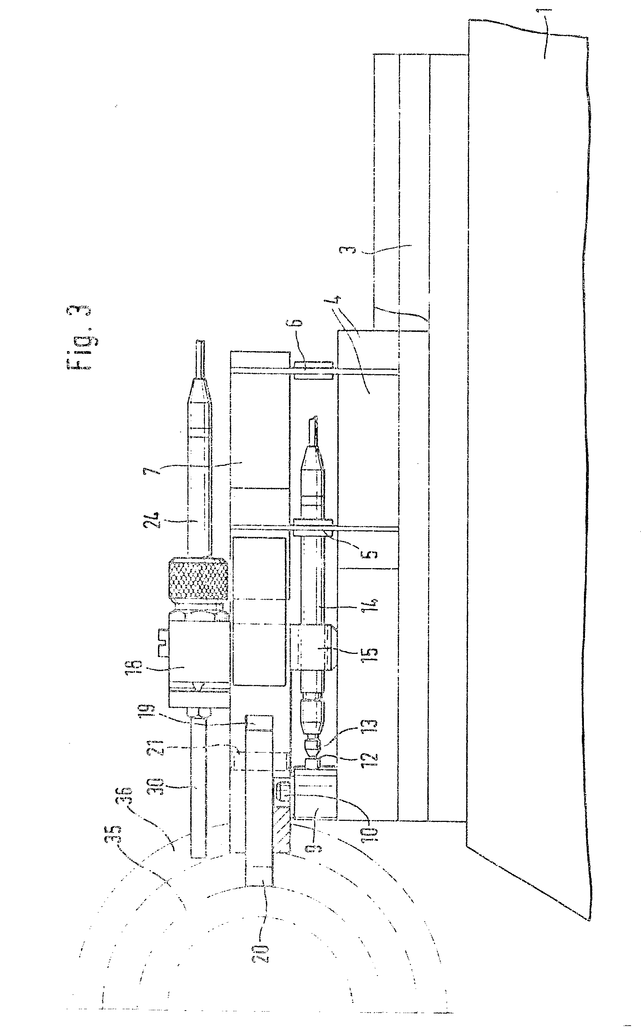

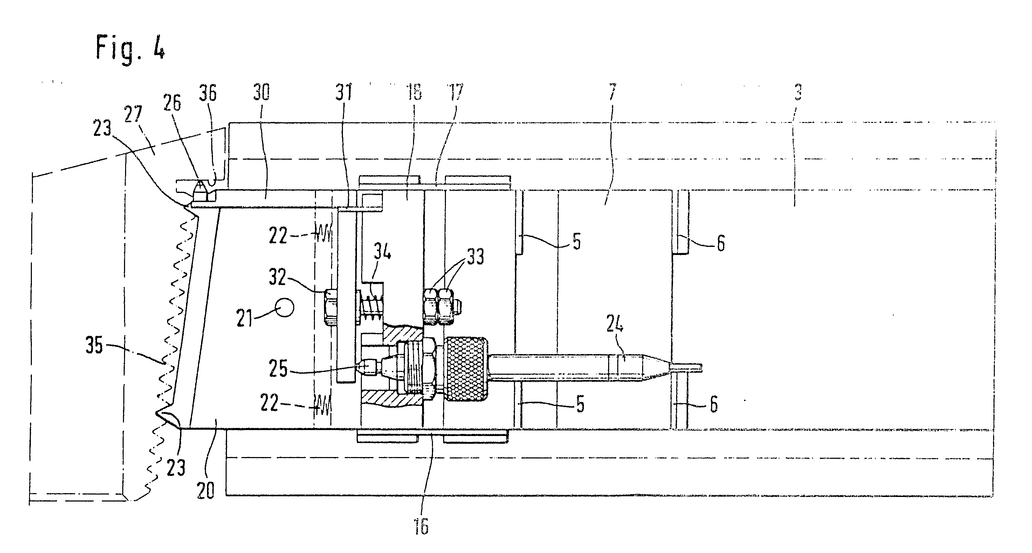

In den Fig. 3 und 4 ist eine Prüfvorrichtung für ein Rohr-Außengewinde dargestellt. Die den Fig. 1 und 2 entsprechenden Bauteile sind mit gleichen Bezugzeichen versehen.

An dem zweiten Meßträger 18 ist die zweite Tasteinrichtung 24 angeordnet. Deren Meßstift 25 schlägt beim Ausführungsbeispiel nach den Fig. 3 und 4 nicht direkt an der Anlageschulter 29 an. Zwischen dem Meßkopf 26 und dem Meßstift 25 ist ein Winkelhebel 30 vorgesehen. Dieser ist mittels einer Blattfeder 31 an dem zweiten Meßträger 18 schwenkbar gelagert. Zwischen dem einen Schenkel des Winkelhebels 30 und dem Meßträger 18 ist ein Schraubbolzen 32 mit Gegenmuttern 33 angeordnet. Zwischen dem einen Schenkel des Winkelhebels und dem Meßträger 2 sitzt am Schraubbolzen 32 eine Druckfeder 34. Mit dieser Einrichtung läßt sich eine gewünschte Vorspannung des Winkelhebels einstellen.

Die Funktionsweise der in den Fig. 3 und 4 gezeigten Vorrichtung ist etwa folgende:

Mittels des Schleppschlittens 1 wird der Meßkopf 20 an das Außengewinde 35 angefahren. Die Blattfedern 16 und 17 stellen sicher, daß die Zähne 23 in Gewindegänge des Außengewindes 35 einfahren. Entsprechend des jeweiligen Durchmessers wird über die Blattfedern 5 und 6 der Meßträger 7 gegenüber dem Block 4 parallelogrammartig versetzt. Diese Versetzung erfaßt der Taster 14. Beim Anfahren der Vorrichtung an das Gewinde kommt der Meßkopf 26 an der Anlageschulter 36 zur Anlage. Entsprechend der jeweiligen Lage der Anlageschulter 36 verschwenkt sich der Winkelhebel 30. Diese Verschwenkung wird von der Tasteinrichtung 24 erfaßt.

In der folgenden Tabelle sind Beispiele möglicher auftretender Fälle dargestellt. Dabei ist T1 das Maß der Abweichung des tatsächlichen Radius des Außengewindes an einer Stelle vom Nennwert des Radius an dieser Stelle. T2 ist die Abweichung der tatsächlichen Lage der Anlageschulter von dem Nennwert; x ist ein konstanter Faktor.

| Fall | T 1 – T 2 | | Korrekturwert |
|---|---|---|---|
| 1 | $0x - 0x$ | = | 0 |
| 2 | $+10x - (-10x)$ | = | $+20x$ |
| 3 | $-10x - (-10x)$ | = | 0 |
| 4 | $-10x - (+10x)$ | = | $-20x$ |
| 5 | $+10x - (+10x)$ | = | 0 |

Fortsetzung

| Fall | T 1 – T 2 | | Korrekturwert |
|------|-----------|---|---------------|
| 6 | $0\,x - (+10\,x)$ | $=$ | $-10\,x$ |
| 7 | $0\,x - (-10\,x)$ | $=$ | $+10\,x$ |
| 8 | $-10\,x - (0\,x)$ | $=$ | $-10\,x$ |
| 9 | $+10\,x - 0\,x$ | $=$ | $+10\,x$ |

Im Fall 1 ist eine Nacharbeit nicht erforderlich, da sowohl das Gewinde als auch die Schulter beim Sollwert liegen. In den Fällen 3 und 5 ist ebenfalls keine Nacharbeit erforderlich, da beide Maße T1 und T2 Untermaß (Fall 3) bzw. Übermaß (Fall 5) haben, so daß die gegenseitige Lage des Außengewindes 35 und der Anlageschulter 36 in der Weise richtig ist, daß ein entsprechendes Außengewinde mit Anlageschulter zu dem gewünschten dichten Sitz führt.

In den Fällen 2, 7 und 9 ist eine Nacharbeit des Außengewindes 1 erforderlich, da im Fall 2 das Außengewinde Übermaß und die Anlageschulter Untermaß hat. Im Fall 7 hat die Anlageschulter Untermaß. Im Fall 9 hat das Außengewinde Übermaß.

In den Fällen 4, 6 und 8 ist die Anlageschulter 36 nachzuarbeiten. Im Fall 4 hat das Außengewinde Untermaß und die Anlageschulter 36 Übermaß. Entsprechendes gilt für die Fälle 6 und 8.

Insgesamt zeigt bei beiden beschriebenen Ausführungsbeispielen der Vergleich der Ausgangsgrößen der Tasteinrichtungen 14 und 24 ob das Gewinde oder die Anlageschulter nachbearbeitet werden muß. Dieser Vergleich läßt sich beispielsweise mittels einer elektronischen Schaltung durchführen. Das jeweilige Ergebnis (Korrekturwert) kann digital oder analog angezeigt werden. Der jeweilige Korrekturwert kann zur Durchführung der nötigen Korrektur manuell oder automatisch an die Steuerung der Werkzeugmaschine eingegeben werden.

Die beschriebenen Vorrichtungen sind einfach aufgebaut. Durch die Blattfedern 5 und 6 bzw. 16 und 17 ist gleichzeitig eine Führung und eine federnde Lagerung des ersten bzw. zweiten Meßträgers gegeben. Der Meßkopf 20 ist einfach auszutauschen.

**Patentansprüche**

1. Vorrichtung für eine Bearbeitungsmaschine zur Prüfung der gegenseitigen Lage eines konischen Gewindes (28; 35) und einer diesem zugeordneten Anlageschulter (29; 36) mittels einer Tasteinrichtung (14, 24), wobei ein erster Meßträger (7) an einem Führungsblock (1, 4) in einer ersten Bewegungsrichtung diesem gegenüber beweglich gelagert ist, ein zweiter Meßträger (18) an dem ersten Meßträger (7) in einer linearen zweiten Bewegungsrichtung federnd gelagert ist und ein erster in der ersten Bewegungsrichtung an das Gewinde (28; 35) anfahrbarer Meßkopf (20) sowie ein zweiter in der zweiten Bewegungsrichtung an die Anlageschulter (29; 36) anfahrbarer Meßkopf (26) vorgesehen sind, dadurch gekennzeichnet, daß zum Anfahren des ersten Meßkopfes (20) an das Gewinde (28; 35) der erste Meßträger (7) in der ersten Bewegungsrichtung linear gegenüber dem Führungsblock (1, 4) versetzbar ist und die erste Bewegungsrichtung im Winkel von 90° zur zweiten Bewegungsrichtung liegt und daß eine erste Tasteinrichtung (14) den Verschiebeweg des ersten Meßträgers (7) bzw. des ersten Meßkopfes (20) in der ersten Bewegungsrichtung und eine zweite Tasteinrichtung (24) den Verschiebeweg des zweiten Meßkopfes (26) in der zweiten Bewegungsrichtung erfaßt.

2. Vorrichtung nach Anspruch 1, dadurch gekennzeichnet, daß der erste Meßträger (7) an einem Block (4) und/oder der zweite Meßträger (18) an dem ersten Meßträger (7) mittels beidseitig vorgesehener Blattfedern (5, 6 bzw. 16, 17) gelagert ist.

3. Vorrichtung nach Anspruch 1 oder 2, dadurch gekennzeichnet, daß der erste Meßträger (7) mittels einer Feder (8) gegenüber dem Schlitten (1) vorgespannt ist.

4. Vorrichtung nach Anspruch 3, dadurch gekennzeichnet, daß zwischen dem ersten Meßträger (7) und dem Block (4) eine Zapfen-Bohrungs-Verbindung (10, 11) vorgesehen ist.

5. Vorrichtung nach einem der vorhergehenden Ansprüche, dadurch gekennzeichnet, daß die erste Tasteinrichtung (14) an dem ersten Meßträger (7) befestigt ist und mittels eines Meßstiftes (13) gegen eine Anschlagfläche (12) des Blockes (4) schlägt.

6. Vorrichtung nach einem der vorhergehenden Ansprüche, dadurch gekennzeichnet, daß zwischen dem zweiten Meßkopf (26) und dem zweiten Meßträger (18) eine Vorspannfeder (34) vorgesehen ist.

7. Vorrichtung nach einem der vorhergehenden Ansprüche, dadurch gekennzeichnet, daß der zweite Meßkopf (26) an einem verschwenkbaren Winkelhebel (30) sitzt, der einen Meßstift (25) der zweiten an dem zweiten Meßträger (18) befestigten Tasteinrichtung (24) beaufschlagt.

8. Vorrichtung nach Anspruch 7, dadurch gekennzeichnet, daß der Winkelhebel (30) mittels einer Blattfeder (31) an dem zweiten Meßträger (18) gelagert ist.

9. Vorrichtung nach einem der vorhergehenden Ansprüche, dadurch gekennzeichnet, daß der erste Meßkopf (20) mit wenigstens einem dem Gewinde (28, 35) entsprechenden Zahn (23) versehen ist.

10. Vorrichtung nach Anspruch 9, dadurch gekennzeichnet, daß der erste Meßkopf (20) mit wenigstens zwei Zähnen (23) versehen ist und mittels eines Zapfens (21) an dem zweiten Meßträger (18) schwenkbar gelagert ist.

## Claims

1. A device for a processing machine for checking the mutual position of a conical thread (28; 35) and a contact shoulder (29; 36) associated therewith by means of a sensing device (14, 24), in which respect a first measuring support (7) is mounted on a guide block (1, 4) so as to be movable in a first direction of movement relative thereto, a second measuring support (18) is mounted on the first measuring support (7) so as to be resilient in a linear second direction of movement, and a first measuring head (20) which is approachable in the first direction of movement to the thread (28; 35) as well as a second measuring head (26) which is approachable in the second direction of movement to the contact shoulder (29; 36) are provided, characterised in that, for the approaching of the first measuring head (20) to the thread (28; 35), the first measuring support (7) is displaceable in the first direction of movement linearly relative to the guide block (1, 4) and the first direction of movement lies at an angle of 90° to the second direction of movement, and in that a first sensing device (14) detects the path of displacement of the first measuring support (7) or respectively of the first measuring head (20) in the first direction of movement and a second sensing device (24) detects the path of displacement of the second measuring head (26) in the second direction of movement.

2. A device as claimed in claim 1, characterised in that the first measuring support (7) is mounted on a block (4) and/or the second measuring support (18) is mounted on the first measuring support (7) by means of leaf springs (5, 6 or respectively 16, 17) which are provided on both sides.

3. A device as claimed in claim 1 or 2, characterised in that the first measuring support (7) is biassed by means of a spring (8) relative to the carriage (1).

4. A device as claimed in claim 3, characterised in that a pin-and-bore connection (10, 11) is provided between the first measuring support (7) and the block (4).

5. A device as claimed in one of the preceding claims, characterised in that the first sensing device (14) is fastened to the first measuring support (7) and strikes by means of a measuring pin (13) against a stop surface (12) of the block (4).

6. A device as claimed in one of the preceding claims, characterised in that a biassing spring (34) is provided between the second measuring head (26) and the second measuring support (18).

7. A device as claimed in one of the preceding claims, characterised in that the second measuring head (26) is seated on a swivellable angle lever (30) which acts on a measuring pin (25) of the second sensing device (24) which is fastened to the second measuring support (18).

8. A device as claimed in claim 7, characterised in that the angle lever (30) is mounted by means of a leaf spring (31) on the second measuring support (18).

9. A device as claimed in one of the preceding claims, characterised in that the first measuring head (20) is provided with at least one tooth (23) corresponding to the thread (28, 35).

10. A device as claimed in claim 9, characterised in that the first measuring head (20) is provided with at least two teeth (23) and is mounted swingably by means of a trunnion (21) on the second measuring support (18).

## Revendications

1. Dispositif pour machine d'usinage, destiné à contrôler la position mutuelle d'un filetage conique (28, 35) et d'un épaulement d'appui (29, 36) qui lui correspond, au moyen d'un agencement de palpage (14, 24), un premier support de mesure (7) étant placé sur un bloc de guidage (1, 4) de façon à pouvoir se déplacer dans une première direction de déplacement par rapport à lui, un second support de mesure (18) étant placé élastiquement sur la premier support de mesure (7) de façon à pouvoir se déplacer linéairement dans une seconde direction et comportant une première tête de mesure (20), pouvant être rapprochée du filetage (28, 35) dans la première direction de déplacement, ainsi qu'une seconde tête de mesure (26) pouvant être rapprochée de l'epaulement de contact (29, 36) dans la seconde direction de déplacement, caractérisé en ce que, pour rapprocher la première tête de mesure (20) du filetage (28, 35), on peut déplacer linéairement le premier support de mesure (7) dans la première direction de déplacement par rapport au bloc de guidage (1, 4), la première direction de déplacement faisant un angle de 90° avec la seconde direction de déplacement, et en ce qu'un premier agencement de palpage (14) détecte la trajet de déplacement du premier support de mesure (7) ou de la première tête de mesure (20) dans la première direction de déplacement, tandis qu'un second agencement de palpage (24) détecte le trajet de déplacement de la seconde tête de mesure (26) dans la seconde direction de déplacement.

2. Dispositif selon la revendication 1, caractérisé en ce que le premier support de mesure (7) est placé sur un bloc (4) et/ou le second support de mesure (18) sur le premier support des mesure (7) au moyen de ressorts à lames (5, 6, resp. 16, 17) situés des deux côtés.

3. Dispositif selon la revendication 1 ou 2, caractérisé en ce que le premier support de mesure (7) tend à être rappelé vers le chariot (1) au moyen d'un ressort (8).

4. Dispositif selon la revendication 3, caractérisé en ce qu'un assemblage à tenon et alésage (10, 11) est prévu entre le premier support de mesure (7) et le bloc (4).

5. Dispositif selon l'une des revendications précédentes, caractérisé en ce que le premier agencement de palpage (14) est fixé au premier support de mesure (7) et bute au moyen d'un pointeau de mesure (13) contre une surface de butée (12) du bloc (4).

6. Dispositif selon l'une des revendications précédentes, caractérisé en ce qu'un ressort de rappel (34) est interposé entre la seconde tête de mesure (26) et le second support de mesure (18).

7. Dispositif selon l'une des revendications précédentes, caractérisé en ce que la seconde tête de mesure (26) repose sur un levier coudé pivotant (30) qui sollicite un pointeau de mesure (25) de second agencement de palpage (24) fixé au second support de mesure (18).

8. Dispositif selon la revendication 7, caractérisé en ce que le levier coudé (30) est placé au moyen d'un ressort à lames (31) sur le second support de mesure (18).

9. Dispositif selon l'une des revendications précédentes, caractérisé en ce que la première tête de mesure (20) comporte au moins une dent (23) correspondant au filetage (28, 35).

10. Dispositif selon la revendication 9, caractérisé en ce que la première tête de mesure (20) comporte au moins deux dents (23) et est placé au moyen d'un pivot (21) sur le second support de mesure (18) de façon à pouvoir pivoter.

Fig. 1

0 024 007

Fig. 2

0 024 007

Fig. 3

0 024 007

Fig. 4